# EUROPEAN PATENT SPECIFICATION

(11) **EP 1 464 672 B1**
(45) Date of publication and mention of the grant of the patent: **05.05.2010**
(21) Application number: 02715723.9
(22) Date of filing: 10.01.2002
(51) Int. Cl.: C08L 53/02, C08L 95/00

(54) **BLOCK COPOLYMER**
BLOCKCOPOLYMER
COPOLYMERE BLOC

(43) Date of publication of application: 06.10.2004
(73) Proprietor: Japan Elastomer Co., Ltd., Tokyo 100-8440 (JP)
(72) Inventor: TODA, Keiichi, Oita-shi, Oita 870-0131 (JP); NAKAMICHI, Yukinori, Oita-shi, Oita 870-0829 (JP)
(74) Representative: von Kreisler Selting Werner
(86) International application number: PCT/JP2002/000099
(87) International publication number: WO 2003/060009

(56) References cited:
- EP-A1- 0 940 440
- WO-A-95/14049
- JP-A- 6 041 439
- JP-A- 10 212 416
- JP-A- 10 279 809

## Description

The present invention relates to a monoalkenylaromatic compound/conjugated diene block copolymer composition. More particularly, the invention provides a composition of block copolymers having a specific structure and an asphalt composition which contains this block copolymer composition as a modifier, has a high softening point and excellent elongation, is excellent in balance between physical properties, including mechanical strength, and processability, and further has excellent storage stability, and which is suitable for use in, e.g., drainage paving.

Asphalt compositions have hitherto been used extensively in applications such as road paving, waterproof sheets, sound insulation sheets, and roofing. Many attempts have been made to improve properties of asphalts for such applications by adding various polymers thereto. Examples of these polymers include ethylene/vinyl acetate copolymers, ethylene/ethyl acrylate copolymers, rubber latexes, and block copolymers comprising butadiene and a vinylaromatic hydrocarbon.

However, in the case of the ethylene/vinyl acetate copolymers or ethylene/ethyl acrylate copolymers, the asphalt composition is undesirable in that it has poor low-temperature characteristics and develops cracks or the like in the winter season. In addition, since this asphalt composition further has poor elongation characteristics and hence poor caking power (tenacity), it is inferior in aggregate-holding properties especially in road paving.

In the case of the rubber latexes, there are problems concerning profitability or process, for example, that additional heating is necessary for vaporizing the water contained in the latexes.

Under recent circumstances in which the number or speeds of vehicles passing through roads are increasing, there is a desire for the retention of better strength and wear resistance for application to heavy-traffic roads and express highways. There also is a growing desire for a high-performance asphalt composition (asphalt binder for drainage paving) for laying a pavement having a high porosity for the purposes of drainage improvement and noise reduction. Namely, a higher softening point and mechanical strength such as toughness and tenacity are required.

Furthermore, the quality deterioration of straight asphalts resulting from improvements in the degree of refining in petroleum refining has posed some new problems such as ones concerning reduced performances of asphalt compositions and the stability of asphalt compositions in long-term storage. The problem concerning stability in storage is that an asphalt composition undergoes, e.g., a phenomenon in which it wholly comes to have a decrease in performance, e.g., softening point, or separates into phases in which the upper layer and the lower layer differ in performance. Such a phenomenon has not been overcome and has become a serious problem.

An attempt was made to eliminate those problems by making an improvement by increasing the molecular weight of the block copolymer. However, there have been problems, for example, that merely increasing the molecular weight, although effective in improving mechanical strength, results in an increased melt viscosity and a considerable sacrifice of processability in, e.g., road paving. With respect to storage stability, increasing the molecular weight results in a considerable decrease in stability and no improving effect is observed.

An asphalt composition containing a block copolymer having a specific molecular structure has been proposed as a higher-performance asphalt composition having a higher softening point (JP-A-6-041439). Although this composition is a composition which combines high softening point, penetration, and elongation with excellent cold resistance and processability, it still remains unimproved in storage stability. The composition cannot be used in applications where storage stability is required.

As described above, none of the asphalt compositions containing any of the polymers heretofore in use has high softening point, penetration, and elongation, which are properties required of asphalt compositions, simultaneously has a high degree of balance between these properties and processability, and further has excellent storage stability. There is a strong desire for such an asphalt composition.

An object of the invention is to eliminate those problems of asphalt compositions heretofore in use and to provide an asphalt composition which has high physical properties unable to be attained so far, such as, e.g., a high softening point, high elongation, and high mechanical strength, has a high degree of balance between these physical properties and processability, and further has excellent storage stability. Another object is to provide a block copolymer composition for providing the asphalt composition.

The present inventors made extensive investigations in order to develop an asphalt composition having the performances shown above. As a result, they found that an asphalt composition containing, in an amount in a specific range, an alkenylaromatic compound/conjugated diene block copolymer having a structure in an exceedingly limited range shows highly excellent performances and accomplishes the objects. The invention has been thus completed.

Namely, the invention provides the followings.
1) A block copolymer composition comprising: from 100 to 20% by weight block copolymer (A) which comprises at least two polymer blocks mainly comprising a monoalkenylaromatic compound and at least one polymer block mainly comprising a conjugated diene; and from 0 to 80% by weight block copolymer (B) which comprises at least one polymer block mainly comprising a monoalkenylaromatic compound and at least one polymer block mainly comprising a conjugated diene and which has a peak molecular weight corresponding to from 1/3 to 2/3 the peak molecular weight of the block copolymer (A), wherein:
   (1) the polymer blocks mainly comprising a monoalkenylaromatic compound have a molecular weight distribution of from 5 to 20 in terms of the ratio of the height (H) to half band width (W) of the peak in a chromatogram obtained by GPC (H/W);
   (2) the content of the polymer blocks mainly comprising a monoalkenylaromatic compound (BS) is from 10% by weight to less than 48% by weight based on the total weight of the block copolymers (A) and (B);
   (3) the block copolymers (A) and (B) as a whole have a weight-average molecular weight (Mw) of from 100,000 to 500,000; and
   (4) in the whole block copolymers (A) and (B), the alkenylaromatic compound content (TS-BS) obtained by subtracting the content of the polymer blocks mainly comprising a monoalkenylaromatic compound (BS) from the total combined monoalkenylaromatic compound content (TS) is from 2 to 30% by weight.
2) The block copolymer composition as described in 1) above which comprises from 98 to 20% by weight block copolymer (A) and from 2 to 80% by weight block copolymer (B).
3) The block copolymer composition as described in 1) above wherein the total combined mono alkenylaromatic compound content (TS) is from 10 to 50% by weight; the polymer blocks mainly comprising a monoalkenylaromatic compound have a peak molecular weight of from 5,000 to 50,000; the block copolymers (A) and (B) as a whole have a vinyl bond content of from 8% by weight to 70% by weight; and the block copolymer composition has a softening temperature as measured by static thermomechanical analysis (TMA) of from 80°C to 130°C.
4) The block copolymer composition as described in 3) above wherein the monoalkenylaromatic compound is styrene.
5) An asphalt composition comprising from 2 to 30 parts by weight of the block copolymer composition as described in any one of 1) to 4) above and from 70 to 98 parts by weight of an asphalt.

### <Best Mode for Carrying Out the Invention>

The invention will be explained below in detail.

Ingredient (A) constituting the invention is a block copolymer comprising at least two polymer blocks mainly comprising a monoalkenylaromatic compound and at least one polymer block mainly comprising a conjugated diene.

The polymer blocks mainly comprising a monoalkenylaromatic compound are polymer blocks each comprising at least 50% by weight monoalkenylaromatic compound, i.e., comprising a monoalkenylaromatic compound substantially as the main component. The polymer block mainly comprising a conjugated diene is a polymer block comprising at least 50% by weight conjugated diene, i.e., comprising a conjugated diene substantially as the main component.

Examples of the monoalkenylaromatic compound in the block copolymer composition according to the invention include monomers such as styrene, p-methylstyrene, tert-butylstyrene, α-methylstyrene, and 1,1-diphenylethylene.
Of these, styrene is preferred. These monomers may be used alone or in combination of two or more thereof.

On the other hand, examples of the conjugated diene include monomers such as 1,3-butadiene, isoprene, 2,3-dimethyl-1,3-butadiene, piperylene, 3-butyl-1,3-octadiene, and phenyl-1,3-butadiene. Of these, 1,3-butadiene and isoprene are preferred. These monomers may be used alone or in combination of two or more thereof.

Ingredient (B) constituting the invention is a block copolymer comprising at least one polymer block mainly comprising a monoalkenylaromatic compound and at least one polymer block mainly comprising a conjugated diene.

The polymer block mainly comprising a monoalkenylaromatic compound is a polymer block comprising at least 50% by weight monoalkenylaromatic compound, i.e., comprising a monoalkenylaromatic compound substantially as the main component. The polymer block mainly comprising a conjugated diene is a polymer block comprising at least 50% by weight conjugated diene, i.e., comprising a conjugated diene substantially as the main component.

Examples of the monoalkenylaromatic compound include monomers such as styrene, p-methylstyrene, tert-butylstyrene, α-methylstyrene, and 1,1-diphenylethylene. Of these, styrene is preferred. These monomers may be used alone or in combination of two or more thereof.

On the other hand, examples of the conjugated diene include monomers such as 1,3-butadiene, isoprene, 2,3-dimethyl-1,3-butadiene, piperylene, 3-butyl-1,3-octadiene, and phenyl-1,3-butadiene. Of these, 1,3-butadiene and isoprene are preferred. These monomers may be used alone or in combination of two or more thereof.

The peak molecular weight of ingredient (B) constituting the invention, which is measured by gel permeation chromatography (GPC), is in the range of from 1/3 to 2/3 the peak molecular weight of ingredient (A) measured likewise, from the standpoints of cohesive force and the softening point, elongation, and melt viscosity of an asphalt composition.

Ingredient (A) constituting the invention is preferably composed of three blocks, i.e., two polymer blocks mainly comprising a monoalkenylaromatic compound and a polymer block mainly comprising a conjugated diene, from the standpoint of the cohesive force of the polymer blocks mainly comprising a monoalkenylaromatic compound. Ingredient (A) may be composed of four or more blocks bonded to one another in such a manner as not to cause performance deterioration.

Ingredient (B) constituting the invention is preferably composed of two blocks, i.e., a polymer block mainly comprising a monoalkenylaromatic compound and a polymer block mainly comprising a conjugated diene, from the standpoint of the cohesive force of the polymer blocks mainly comprising a monoalkenylaromatic compound. Ingredient (B) may be composed of three or more blocks bonded to one another in such a manner as not to cause performance deterioration.

In the block copolymer composition of the invention, the content of ingredient (A) is from 100 to 20% by weight and the content of ingredient (B) is from 0 to 80% by weight. From the standpoint of the softening point, toughness, tenacity, and other properties of the asphalt composition to be obtained, the content of ingredient (B) is preferably 60% by weight or lower, more preferably 40% by weight or lower.

The content of ingredient (A) in the block copolymer composition of the invention is preferably from 98 to 20% by weight and the content of ingredient (B) in the composition is preferably from 2 to 80% by weight. With respect to the content of ingredient (B), it is more preferably from 5 to 60% by weight, even more preferably from 10 to 40% by weight.

In the block copolymer composition according to the invention, the polymer blocks mainly comprising a monoalkenylaromatic compound should have the following molecular weight distribution in terms of the ratio of the height (H) to half band width (W) of the peak in a chromatogram obtained by GPC (H/W) . Namely, the ratio should be 5 or higher from the standpoint of the cohesive force of the monoalkenylaromatic compound polymer blocks, i.e., from the standpoint of performances of the asphalt composition such as softening point, toughness, and tenacity, and be 20 or lower from the standpoints the rate of dissolution in asphalts, etc. and quality stability after dissolution. The value of H/W is desirably from 7 to 19, more desirably from 9 to 17.

The content of the polymer blocks mainly comprising a monoalkenylaromatic compound (BS) in the block copolymer composition according to the invention is 10% by weight or higher from the standpoint of the cohesive force of the monoalkenylaromatic compound polymer blocks. The content thereof is less than 48% by weight from the standpoint of the storage stability of the asphalt composition to be obtained, such as unsusceptibility to phase separation and unsusceptibility to change in softening point with time. The range of the content (BS) is preferably from 13 to 45% by weight, more preferably from 15 to 40% by weight.

The weight-average molecular weight of the block copolymers (A) and (B) as a whole in the invention should be 100,000 or higher from the standpoint of the softening point, toughness, tenacity, and other properties of the asphalt composition to be obtained, and be 500,000 or lower from the standpoint of solubility in asphalts. The range thereof is preferably from 120,000 to 500,000, more preferably from 140,000 to 300,000.

In the block copolymers in the invention, the alkenylaromatic compound content (TS-BS) obtained by subtracting the content of the polymer blocks mainly comprising a monoalkenylaromatic compound (BS) from the total combined mono alkenylaromatic compound content (TS) is 2% by weight or higher from the standpoint of the storage stability of the asphalt composition to be obtained, and is 30% by weight or lower from the standpoint of the effect of improving softening point, toughness, tenacity, etc. The content thereof is from 3 to 20% by weight, desirably from 5 to 18% by weight.

In the block copolymers in the invention, the total combined monoalkenylaromatic compound content (TS) is desirably 10% or higher from the standpoint of the cohesive force of the polymer blocks mainly comprising a monoalkenylaromatic compound, i.e., from the standpoint of the mechanical strength of the asphalt composition to be obtained, such as toughness and tenacity. The content (TS) is desirably 50% or lower from the standpoints of the storage stability and low-temperature characteristics of the asphalt composition to be obtained and the rate of dissolution in asphalts. The range of TS is preferably from 15 to 45% by weight, more preferably from 20 to 40% by weight.

The peak molecular weight of the polymer blocks mainly comprising a monoalkenylaromatic compound in the block copolymers in the invention is desirably 5,000 or higher from the standpoint of performances of the asphalt composition to be obtained, such as softening point, toughness, and tenacity. The peak molecular weight thereof is desirably 50,000 or lower from the standpoints of solubility in asphalts and the storage stability and other properties of the asphalt composition to be obtained. The range of the peak molecular weight thereof is preferably from 7,000 to 40,000, more preferably from 9,000 to 30,000.

The proportion of the conjugated diene which has been incorporated in the form of 1,2-bond in all conjugated diene incorporated in the block copolymers in the invention, i.e., the vinyl bond content, is desirably 8% by weight or higher from the standpoint of the softening point of the asphalt composition to be obtained. The vinyl bond content is desirably 70% by weight or lower from the standpoints of the heat stability of the block copolymer composition and the low-temperature characteristics and heat stability of the asphalt composition to be obtained. The range of the vinyl bond content is preferably from 15 to 60% by weight, more preferably from 20 to 50% by weight.

Furthermore, the softening temperature of the block copolymer composition of the invention, as measured with a static thermomechanical tester (TMA), is desirably 80°C or higher from the standpoints of cohesive force and performances of the asphalt composition to be obtained, such as softening point, toughness, and tenacity. The softening temperature thereof is desirably 130°C or lower from the standpoints of the melt viscosity of the asphalt composition to be obtained and compatibility with asphalts. The range of the softening temperature thereof is preferably from 85 to 125°C, more preferably from 90 to 120°C.

The block copolymers in the invention preferably contain monomer segments each consisting of from one to eight alkenylaromatic compound monomer units jointed in sequence. The proportion of these monomer segments in each block copolymer preferably is 3% by weight or higher based on all alkenylaromatic compound from the standpoints of the storage stability of the asphalt composition to be obtained, and is 40% by weight or lower from the standpoint of performances such as softening point. The range of the proportion thereof is desirably from 5 to 35% by weight, more desirably from 9 to 30% by weight.

These monomer segments each consisting of from one to eight alkenylaromatic compound monomer units jointed in sequence are formed in a block substantially mainly comprising a conjugated diene. For example, polymerization for producing a block mainly comprising a conjugated diene is conducted in such a manner that after a conjugated diene is charged into a reactor, a monoalkenylaromatic compound is gradually added thereto. Alternatively, a conjugated diene and an alkenylaromatic compound are simultaneously charged into a reactor and polymerized optionally in the presence of a randomizing agent while optionally further adding the conjugated diene. Thus, a polymer block mainly comprising the conjugated diene can be obtained which contains, formed therein, monomer segments each consisting of from one to eight alkenylaromatic compound monomer units jointed in sequence.

The asphalt composition modified with the block copolymer composition of the invention comprises from 2 to 30 parts by weight of the block copolymer composition and from 70 to 98 parts by weight of an asphalt from the standpoints of asphalt-modifying effect, melt viscosity, etc. Preferred is the case in which the asphalt composition comprises from 2 to 15 parts by weight of the block copolymer composition and from 85 to 98 parts by weight of an asphalt. Even more preferred is the case in which the asphalt composition comprises from 4 to 12 parts by weight of the block copolymer composition and from 88 to 96 parts by weight of an asphalt.

The asphalt to be used in the invention is not particularly limited. Examples thereof include asphalts in ordinary use such as, e.g., straight asphalts, (semi)blown asphalts, and mixtures thereof. Preferred examples thereof include a straight asphalt having a penetration of from 40 to 120, a blown asphalt having a penetration of from 10 to 30, and mixtures of these.

Ingredient (A) to be used for constituting the invention can be obtained in the following manner. A butadiene/styrene copolymer block is formed, for example, by: a method comprising polymerizing styrene in, e.g., an inert hydrocarbon solvent using an organolithium compound as a polymerization initiator to form a styrene polymer block and subsequently polymerizing butadiene while gradually adding and polymerizing styrene; a method comprising polymerizing a butadiene/styrene mixture; either of these methods in which the polymerization is conducted in the presence of a polar compound according to need; or any of these methods in which a conjugated diene is additionally added according to need. Thereafter, styrene is polymerized again, and the operation described above is repeated according to need to thereby obtain ingredient (A). In this preparation, the amount of the organolithium compound is regulated so that the peak molecular weight as measured by GPC comes to be in the range of from 50,000 to 500,000 in terms of standard polystyrene. In the case of forming a butadiene/styrene copolymer block, monomer segments each consisting of from one to eight alkenylaromatic compound monomer units joined in sequence are formed by the method described above in a block substantially mainly comprising the conjugated diene.

Ingredient (B) which may be used for constituting the invention can be obtained in the following manner. A butadiene/styrene copolymer block is formed, for example, by: a method comprising polymerizing styrene in, e.g., an inert hydrocarbon solvent using an organolithium compound as a polymerization initiator to form a styrene polymer block and subsequently polymerizing butadiene while gradually adding and polymerizing styrene; a method comprising polymerizing a butadiene/styrene mixture; either of these methods in which the polymerization is conducted in the presence of a polar compound according to need; or any of these methods in which a conjugated diene is additionally added according to need. Thereafter, the operation described above is repeated according to need to thereby obtain ingredient (B). In this preparation, the amount of the organolithium compound is regulated so that the peak molecular weight as measured by GPC comes to be in the range of from 1/3 to 2/3 the peak molecular weight of ingredient (A).

In the case of forming a butadiene/styrene copolymer block, monomer segments each consisting of from one to eight alkenylaromatic compound monomer units joined in sequence are formed by the method described above in a block substantially mainly comprising the conjugated diene.

After completion of the reactions, the active species are deactivated by adding water, an alcohol, an acid, or the like to obtain ingredient (A) and ingredient (B). These ingredients in a solution form are blended in a given proportion according to need and the mixture is subjected to, e.g., steam stripping. Thus, a block copolymer composition according to the invention can be obtained.

The block copolymer composition comprising ingredient (A) and ingredient (B) according to the invention can be obtained by a technique other than that described above. Namely, ingredient (B) is produced through polymerization by the same technique as described above and, thereafter, an appropriate coupling agent is added to the polymerization system in a given amount based on the polymerization initiator to thereby obtain a copolymer product as ingredient (A). Thus, the desired composition is obtained in the same reaction system. When this technique is used, the peak molecular weight of ingredient (A) is limited to multiples of the peak molecular weight of ingredient (B). However, this technique is industrially more advantageous than the method described above.

As the coupling agent is preferably used a bifunctional coupling agent. Examples of such ones include halogenated silicon compounds such as dichlorodimethylsilane and phenylmethyldichlorosilane, alkoxysilicon compounds such as dimethyldimethoxysilane, tin compounds such as dimethyltin dichloride, ester compounds such as methyl benzoate, vinylarenes such as divinylbenzene, and bifunctional epoxy compounds or the like.

The molecular weight distribution of each polymer block mainly comprising a monoalkenylaromatic compound in the block copolymer composition of the invention can be regulated by several methods. Examples thereof include a method in which a polymerization catalyst is gradually added to initiate polymerization and thereby obtain a widened molecular weight distribution; a method in which the revolution speed of the stirrer in the reactor is changed to thereby regulate the molecular weight distribution; a method in which a polymerization catalyst having a reduced dissociation rate is used to thereby obtain a widened molecular weight distribution; and the like. In general, an organolithium compound in nonpolar solvents is in an associated state and there are cases where the rate of a polymerization initiation reaction is determined by the rate of dissociation of the associated molecules. Such cases are in the use of n-butyllithium, which has a high tendency to associate, as a polymerization catalyst in cyclohexane. Under such circumstances, the molecular weight distribution of a block can be regulated by adding a slight amount of a polar compound to regulate the degree of association and the rate of dissociation.

In conducting polymerization for producing blocks mainly comprising a conjugated diene in the block copolymers (A) and (B), it is possible to regulate the randomness of a monoalkenylaromatic compound in the conjugated diene block by adding a polar compound as a randomizing agent. For example, use can be made of ethers and tertiary amines, such as, e.g., ethylene glycol dimethyl ether, tetrahydrofuran, α-methoxytetrahydrofuran, and N,N,N',N'-tetramethylethylenediamine. Preferably, tetrahydrofuran and N,N,N',N'-tetramethylethylenediamine can be used. When an organolithium compound, for example, is used as an initiator in obtaining a polymer, such a polar compound can be used in such a manner that it is added in a small amount to an inert hydrocarbon solvent such as n-hexane, cyclohexane, benzene, toluene, or octane. It is also possible to regulate the randomness of butadiene and styrene by a method in which styrene is charged first in place of a butadiene/styrene mixture, and butadiene is gradually added.

Furthermore, in obtaining a polymer using, e.g., an organolithium compound as an initiator, the vinyl bond content can be regulated by using a polar compound such as an ether or tertiary amine, e.g., ethylene glycol dimethyl ether, tetrahydrofuran, α-methoxytetrahydrofuran, N,N,N',N'-tetramethylethylenediamine, or the like, preferably tetrahydrofuran or N,N,N',N'-tetramethylethylenediamine, in an inert hydrocarbon solvent such as n-hexane, cyclohexane, benzene, toluene, or octane.

Stabilizers such as an antioxidant and a light stabilizer may be added to the composition of the invention according to need. Examples of the stabilizers include hindered phenol antioxidants such as 2,6-di-t-butyl-4-methylphenol, n-octadecyl 3-(4'-hydroxy-3',5'-di-t-butylphenyl)propionate, 2,2'-methylenebis(4-methyl-6-t-butylphenol), 2,2'-methylenebis(4-ethyl-6-t-butylphenol), 2,4-bis[(octylthio)methyl]-o-cresol, 2-t-butyl-6-(3-t-butyl-2-hydroxy-5-methylbenzyl)-4-methylphenyl acrylate, and 2,4-di-t-amyl-6-[1-(3,5-di-t-amyl-2-hydroxyphenyl)ethyl]phenyl acrylate; sulfur compound antioxidants such as dilauryl thiodipropionate, lauryl ' stearyl thiodipropionate, and pentaerythritol tetrakis(β-laurylthiopropionate); phosphorus compound antioxidants such as tris(nonylphenyl) phosphite and tris(2,4-di-t-butylphenyl) phosphite; and the like. Examples of the light stabilizer include benzotriazole compound ultraviolet absorbers such as 2-(2'-hydroxy-5'-methylphenyl)benzotriazole, 2-(2'-hydroxy-3',5'-di-t-butylphenyl)benzotriazole, and 2-(2'-hydroxy-3',5'-di-t-butylphenyl)-5-chlorobenzotriazole, benzophenone compound ultraviolet absorbers such as 2-hydroxy-4-methoxybenzophenone, hindered amine light stabilizers, and the like.

Besides the stabilizers shown above, various additives heretofore in ordinary use in asphalt compositions may be added to the composition of the invention according to need. Examples thereof include fillers or reinforcements such as silica, talc, calcium carbonate, mineral powders, and glass fibers, mineral aggregates, pigments, softeners such as paraffinic, naphthenic, and aromatic process oils, tackifier resins such as coumarone-indene resins and terpene resins, blowing agents such as azodicarbonamide, polyolefin type or low-molecular vinylaromatic thermoplastic resins such as atactic polypropylene and ethylene/ethyl acrylate copolymers, natural rubber, and synthetic rubbers such as polyisoprene rubbers, polybutadiene rubbers, styrene/butadiene rubbers, ethylene/propylene rubbers, chloroprene rubbers, acrylic rubbers, isoprene/isobutylene rubbers, polypentenamer rubbers, and styrene/butadiene block copolymers or styrene/isoprene block copolymers other than those according to the invention. Especially when the asphalt composition is for use in road paving, it is usually mixed with aggregates such as mineral stones, sand, and slag before use.

Methods for mixing in producing the asphalt composition of the invention are not particularly limited. The composition can be prepared through melt-kneading with, e.g., a roll mill, kneader, Banbury mixer, extruder, or the like optionally together with the various additives mentioned above.

The effects attained with the composition of the invention reside in that an asphalt composition having excellent performances is provided, and in particular, reside in that the asphalt composition is greatly improved in balance among storage stability, solubility, and various properties.

Properties of the asphalt compositions heretofore in use have been insufficient for meeting the recent requirements, such as an improvement in durability so as to cope with the increasing traffic volume and impartation of draining/noise-absorbing properties by increasing porosity. Although there have been asphalt compositions improved in durability and porosity, they have had a problem because of their poor storage stability. For example, in the case of a styrene/butadiene block copolymer, durability and initial physical performances are improved by increasing the molecular weight thereof or by heightening the styrene content in the styrene block to increase the cohesive force of the styrene block. However, these techniques each reduce the compatibility of the block copolymer with asphalts, resulting in considerably impaired storage stability. In contrast, reducing the molecular weight or styrene content improves storage stability but resulted in insufficient durability or insufficient initial physical performances. Although attempts were made to balance these properties, satisfactory results have not been obtained.

A marked effect of the invention resides in that a greatly improved balance between two performance requirements inconsistent with each other, i.e., one concerning durability and physical performances and one concerning storage stability, is attained and the two requirements are simultaneously satisfied.

### <Examples>

The invention will be explained below in greater detail by reference to Examples.

Various measurements were made by the following methods.
(I) Measurements of Properties of Block Copolymer Compositions
   1) Total Styrene Content:
      Calculated from the absorption intensity at 262 nm measured with an ultraviolet spectrophotometer (Hitachi UV 200).
   2) Block Styrene Content:
      Styrene polymer blocks (block styrene; BS) were obtained by the oxidative decomposition method using osmium tetroxide and t-butyl hydroperoxide [described in Journal of Polymer Science, Vol.1, p.429 (1946)]. The content of styrene polymer blocks was determined through calculation from the absorption intensity at 262 nm measured with an ultraviolet spectrophotometer (Hitachi UV 200).
   3) Vinyl Content in Butadiene Block Part:
      Determined by the Hampton method (described in Analytical Chem., 21, 943 ('43)] through a measurement with an infrared spectrophotometer (Model 1710, manufactured by Perkin-Elmer).
   4) Static Thermomechanical Analysis:
      A sheet having a thickness of 2 mm obtained by compression-molding a block copolymer was examined for temperature change with a thermomechanical analyzer (TMA-40, manufactured by Shimadzu Corp.) by the penetration method using as a detection rod a quartz rod having a cylindrical tip with a pin diameter of 0.5 mm. The temperature at which the penetration changed abruptly was taken as the softening temperature (load, 10 g; heating rate, 5°C/min).
   5) Peak Molecular Weight and Proportion of Ingredient (A) to Ingredient (B):
      Peak molecular weight and the proportion were determined from a chromatogram obtained by GPC [The apparatus was one manufactured by Waters, and three columns, i.e., two ZORBAX PSM1000-S columns and one PSM 60-S column, manufactured by du Pont, were used in combination. Tetrahydrofuran was used as a solvent. Measuring conditions were a temperature of 35°C, flow rate of 0.7 mL/min, sample concentration of 0.1% by weight, and injection amount of 50 µL.].
      The proportion was calculated in terms of areal ratio in the chromatogram. When the ingredients were completely separable, the areal ratio between these was taken as the proportion. When the two peaks were connected to each other to form a valley, then the chromatogram was divided at the bottom of the valley, i.e., at the minimum value in the chromatogram, and the areal ratio between these was taken as the proportion. When one peak formed a shoulder, i.e., when the chromatogram had no minimum value, then the chromatogram was divided at the inflection point therein and the areal ratio between these was taken as the proportion.
   6) Styrene Segments:
      Styrene segments were determined according to the method based on ozone decomposition developed by Professor Tanaka at Tokyo University of Agriculture and Technology (Kôbunshi Gakkai Yokô-shû, Vol.29, No.7, p.2055).
   7) Peak Molecular Weight of Styrene Polymer Block and H/W:
      For determining the peak molecular weight of styrene polymer blocks, the sample obtained in 2) Block Styrene Content was examined by GPC [The apparatus was one manufactured by Waters, and three columns which respectively were Shodex K-803, K-802, and K-801, manufactured by Showa Denko K.K., were used in combination. Chloroform was used as a solvent. Measuring conditions were a temperature of 35°C, flow rate of 1.0 mL/min, sample concentration of 0.05% by weight, and injection amount of 100 µL.]. From the chromatogram obtained, the molecular weight was plotted as abscissa (logarithmic scale) against the normalized relative ratio (with the area of the whole chromatogram being 100) as ordinate. Calculation was made with the peak height and the half band width of the peak being H and W, respectively.
(II) Measurements of Properties of Asphalt Compositions
   1) Melt Viscosity:
      Measured at 180°C with a Brookfield viscometer.
   2) Toughness and Tenacity:
      Measured in accordance with *Hosô Kôji Ni Kansuru Shiken Hôhô* (edited by The Japan Road Constructors Association).
   3) Elongation, Penetration, and Softening Point:
      Measured in accordance with JIS-K 2207.
   4) Phase Separation
      An asphalt composition was placed in a cylindrical vessel having a diameter of 5.5 cm and a length of 13 cm and allowed to stand at 180°C for 3 days. Thereafter, an upper layer part and a lower layer part of the composition were examined for softening point. Phase separation was evaluated in terms of a softening point difference between the upper and lower layers.

### (EXAMPLE 1)

The atmosphere in a 10-L stainless-steel reactor equipped with a jacket and a stirrer was sufficiently replaced with nitrogen. Thereafter, 7,000 cc of cyclohexane and 200 g of styrene (referred to as first styrene) were charged thereinto. Warm water was passed through the jacket to regulate the temperature of the contents at about 70°C. Subsequently, a cyclohexane solution of n-butyllithium (1.19 g in terms of net amount) was added thereto to initiate polymerization of the first styrene. After the first styrene had been completely polymerized, 1.41 g of tetrahydrofuran and 0.9 g of N,N,N',N'-tetramethylethylenediamine (TMEDA) were added, followed by 700 g of butadiene (1,3-butadiene) and 100 g of styrene (referred to as second styrene). After polymerization was continued to almost completely polymerize the butadiene and second styrene, a coupling agent was added to cause coupling. After addition of the coupling agent, 0.4 g of water was added. Throughout the period of from immediately after the charging of the first styrene to this water addition, the system was continuously stirred with the stirrer. Thereafter, the solution of a block copolymer composition was withdrawn, and 1.9 g of 2,6-di-t-butyl-4-methylphenol and 1.2 g of tris(nonylphenyl) phosphite were added thereto. The resultant solution was subjected to steam stripping to thereby remove the solvent. Subsequently, the residue was dehydrated and dried with heated rolls (120°C) to obtain a block copolymer. Conditions for this operation are summarized in Table 1. The block copolymer composition thus obtained was examined by GPC; the low-molecular main component and high-molecular main component are referred to as (B) and (A), respectively. Properties thereof are shown in Table 2. A mixture of 6 g of the polymer composition and 100 g of a straight asphalt [Sutoasu 60/80, manufactured by Nippon Oil Co., Ltd.] was melt-kneaded at 180°C for 90 minutes to prepare an asphalt composition. Properties of this asphalt composition are shown in Table 3.

### (EXAMPLES 2 TO 6, 9 AND 10 AND COMPARATIVE EXAMPLES 1 TO 6)

In Examples 2 to 6, 9, and 10 and Comparative Examples 1 to 6, block copolymers were obtained under the same conditions as in Example 1 except the conditions shown in Table 1. Properties of the resultant block copolymer compositions are shown in Table 2. Furthermore, the same asphalt as in Example 1 was used and compounded in the same amount by the same method as in Example 1. The results obtained are shown in Table 3.

### (EXAMPLE 7)

The atmosphere in a 10-L stainless-steel reactor equipped with a jacked and a stirrer was sufficiently replaced with nitrogen. Thereafter, cyclohexane and styrene (referred to as first styrene) were charged thereinto in given amounts. Warm water was passed through the jacket to regulate the temperature of the contents at about 70°C. Subsequently, a given amount of a cyclohexane solution of n-butyllithium was added thereto to initiate polymerization of the first styrene. After the first styrene had been completely polymerized, tetrahydrofuran, N,N,N',N'-tetramethylethylenediamine, butadiene (1,3-butadiene), and styrene (referred to as second styrene) were added in given amounts. After polymerization was continued to completely polymerize the butadiene, a given amount of styrene (referred to as third styrene) was added again. After polymerization was continued to completely polymerize the third styrene, water was added to completely deactivate the active species. Thereafter, 2,6-di-t-butyl-4-methylphenol and tris(nonylphenyl) phosphite (cyclohexane solution) were added. Conditions for this operation are shown in Table 1. Properties of the block copolymer composition obtained are shown in Table 2. Furthermore, the same asphalt as in Example 1 was used and compounded in the same amount by the same method as in Example 1. The results obtained are shown in Table 3.

### (EXAMPLE 8)

### (Production of Block Copolymer (B))

The atmosphere in a 10-L stainless-steel reactor equipped with a jacked and a stirrer was sufficiently replaced with nitrogen. Thereafter, cyclohexane and styrene (referred to as first styrene) were charged thereinto in given amounts. Warm water was passed through the jacket to regulate the temperature of the contents at about 70°C. Subsequently, a given amount of a cyclohexane solution of n-butyllithium was added thereto to initiate polymerization of the first styrene. After the first styrene had been completely polymerized, tetrahydrofuran, N,N,N',N'-tetramethylethylenediamine, butadiene (1,3-butadiene), and styrene (second styrene) were added in given amounts. After polymerization was continued to completely polymerize the butadiene and second styrene, water was added to completely deactivate the active species. Thereafter, 2,6-di-t-butyl-4-methylphenol and tris(nonylphenyl) phosphite (cyclohexane solution) were added. Conditions for this operation are shown in Table 1.

### (Production of Block Copolymer (A))

The atmosphere in a 10-L stainless-steel reactor equipped with a jacked and a stirrer was sufficiently replaced with nitrogen. Thereafter, cyclohexane and styrene (referred to as first styrene) were charged thereinto in given amounts. Warm water was passed through the jacket to regulate the temperature of the contents at about 70°C. Subsequently, a given amount of a cyclohexane solution of n-butyllithium was added thereto to initiate polymerization of the first styrene. After the first styrene had been completely polymerized, tetrahydrofuran, N,N,N',N'-tetramethylethylenediamine, butadiene (1,3-butadiene), and styrene (referred to as second styrene) were added in given amounts. After polymerization was continued to completely polymerize the butadiene, a given amount of styrene (referred to as third styrene) was added again. After polymerization was continued to completely polymerize the third styrene, water was added to completely deactivate the active species. Thereafter, 2,6-di-t-butyl-4-methylphenol and tris(nonylphenyl) phosphite (cyclohexane solution) were added. Conditions for this operation are shown in Table 1.

The polymer solutions of block copolymer (B) and block copolymer (A) obtained by the procedures described above were mixed together in a given proportion. The resultant solution was subjected to steam stripping to thereby remove the solvent. Subsequently, the residue was dehydrated and dried with heated rolls (120°C) to obtain a block copolymer composition. Properties of this block copolymer composition are shown in Table 2. The block copolymer composition thus obtained and the same asphalt as in Example 1 were used in the same proportion to prepare an asphalt composition. Properties thereof are shown in Table 3.

It can be seen from those Tables that the asphalt compositions modified with block copolymers having a structure within a specific range have a high softening point, excellent elongation, and high toughness and tenacity and further have excellent storage stability. It can be further seen that the Examples are superior in storage stability to the Comparative Examples when equal in initial softening point thereto, and that the Examples are superior in initial softening point to the Comparative Examples when equal in storage stability thereto.

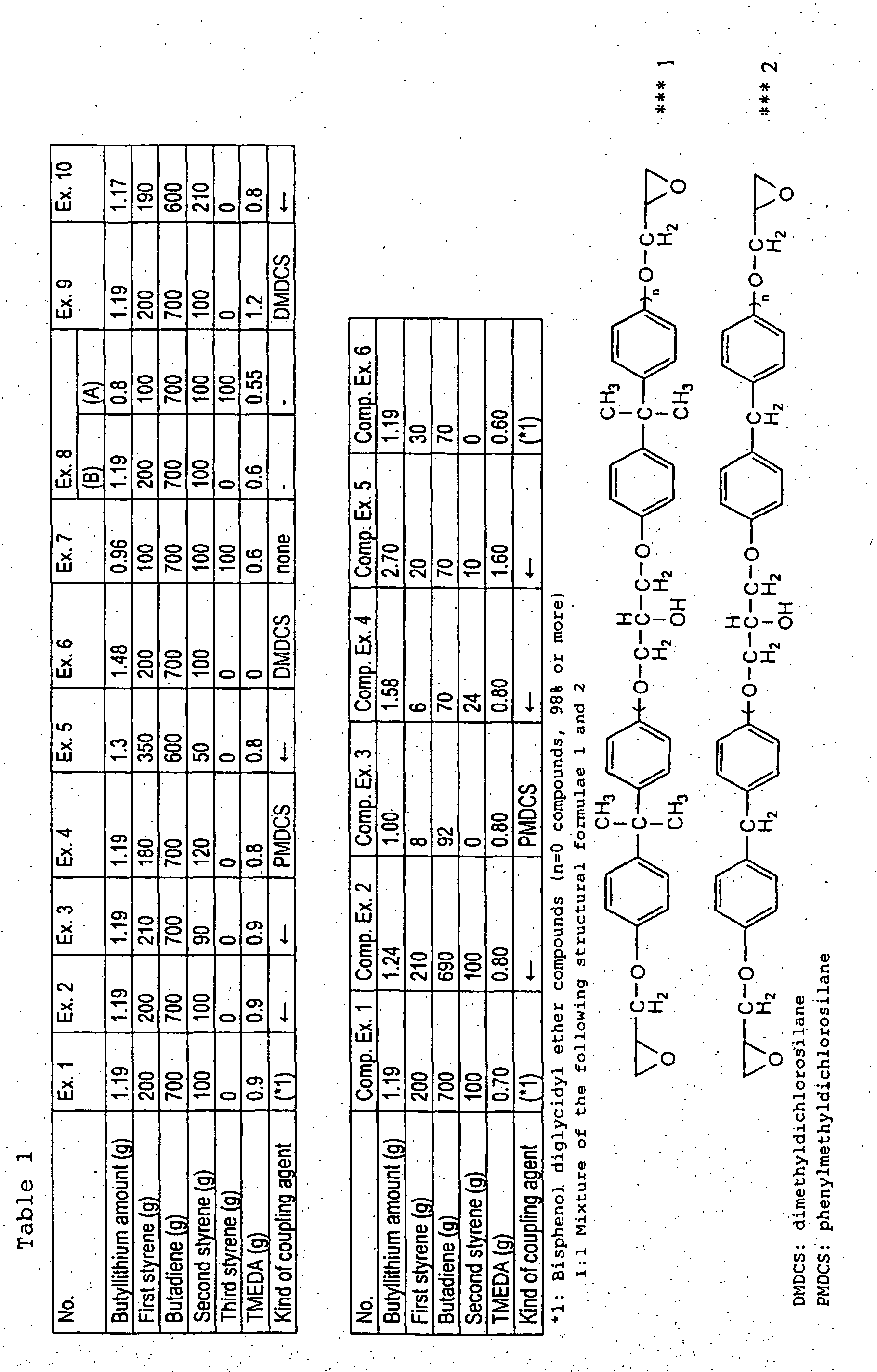

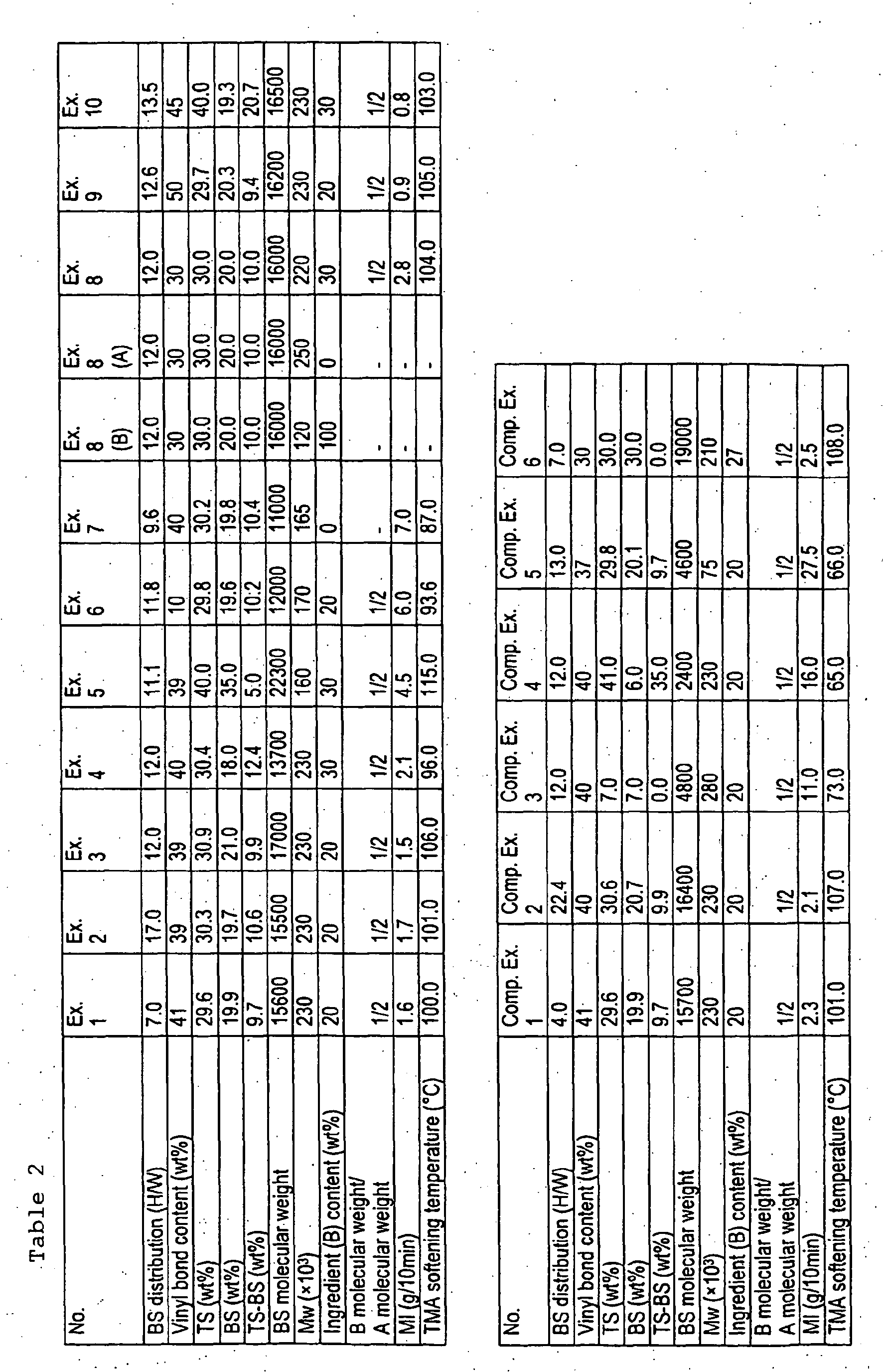

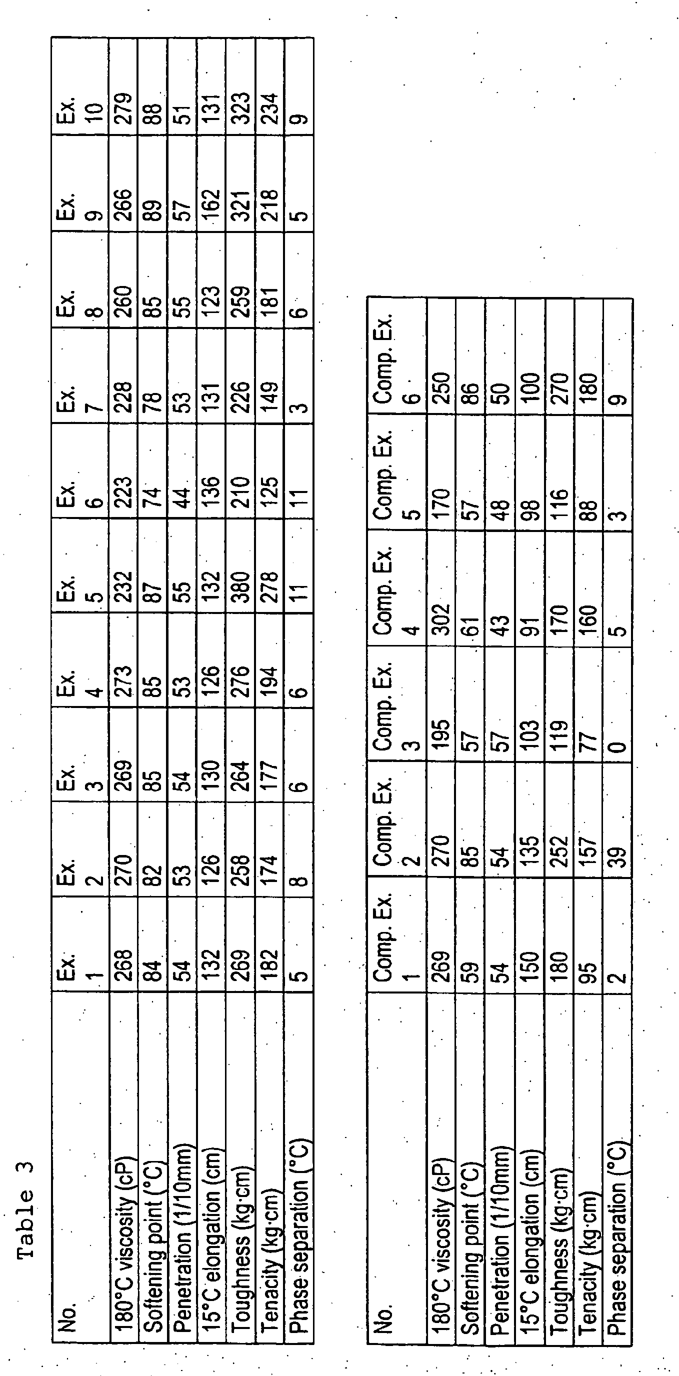

The asphalt composition of the invention has such a high degree of balance that it is excellent in physical properties such as mechanical strength, softening point, and elongation and is excellent also in processability.
The composition further has excellent storage stability. Consequently, the composition can be utilized not only for road paving but also in applications such as waterproof sheets, sound insulation sheets, and water cutoff materials, and has a considerable industrial significance.

## Claims

1. A block copolymer composition comprising:at least 20% by weight block copolymer (A) which comprises at least two polymer blocks mainly comprising a monoalkenylaromatic compound and at least one polymer block mainly comprising a conjugated diene; and up to 80% by weight block copolymer (B) which comprises at least one polymer block mainly comprising a monoalkenylaromatic compound and at least one polymer block mainly comprising a conjugated diene and which has a peak molecular weight corresponding to from 1/3 to 2/3 the peak molecular weight of the block copolymer (A), wherein:
(1) the polymer blocks mainly comprising a monoalkenylaromatic compound have a molecular weight distribution of from 5 to 20 in terms of the ratio of the height (H) to half band width (W) of the peak in a chromatogram obtained by GPC (H/W);
(2) the content of the polymer blocks mainly comprising a monoalkenylaromatic compound (BS) is from 10% by weight to less than 48% by weight based on the total weight of the block copolymers (A) and (B);
(3) the block copolymers (A) and (B) as a whole have a weight-average molecular weight (Mw) of from 100,000 to 500,000; and
(4) in the whole block copolymers (A) and (B), the alkenylaromatic compound content (TS-BS) obtained by subtracting the content of the polymer blocks mainly comprising a monoalkenylaromatic compound (BS) from the total combined monoalkenylaromatic compound content (TS) is from 2 to 30% by weight.

2. The block copolymer composition of claim 1, which comprises from 98 to 20% by weight block copolymer (A) and from 2 to 80% by weight block copolymer (B).

3. The block copolymer composition of claim 1, wherein the total combined monoalkenylaromatic compound content (TS) is from 10 to 50% by weight; the polymer blocks mainly comprising a monoalkenylaromatic compound have a peak molecular weight of from 5,000 to 50,000; the block copolymers (A) and (B) as a whole have a vinyl bond content of from 8% by weight to 70% by weight; and the block copolymer composition has a softening temperature as measured by static thermomechanical analysis (TMA) of from 80°C to 130°C.

4. The block copolymer composition of claim 3, wherein the monoalkenylaromatic compound is styrene.

5. An asphalt composition comprising from 2 to 30 parts by weight of the block copolymer composition of any one of claims 1 to 4 and from 70 to 98 parts by weight of an asphalt.

## Patentansprüche

1. Blockcopolymer-Zusammensetzung, umfassend: wenigstens 20 Gew.-% Blockcopolymer (A), das wenigstens zwei Polymerblöcke, die hauptsächlich eine monoalkenylaromatische Verbindung umfassen, und wenigstens einen Polymerblock, der hauptsächlich ein konjugiertes Dien umfasst, umfasst; und bis zu 80 Gew.-% Blockcopolymer (B), das wenigstens einen Polymerblock, der hauptsächlich eine monoalkenylaromatische Verbindung umfasst, und wenigstens einen Polymerblock, der hauptsächlich ein konjugiertes Dien umfasst, umfasst und ein Peak-Molekulargewicht aufweist, das 1/3 bis 2/3 des Peak-Molekulargewichts des Blockcopolymers (A) entspricht, wobei:
(1) die Polymerblöcke, die hauptsächlich eine monoalkenylaromatische Verbindung umfassen, eine Molekulargewichtsverteilung 5 bis 20 als Verhältnis der Höhe (H) des Peaks zu seiner Halbwertsbreite (W) in einem durch GPC erhaltenen Chromatogramm (H/W) aufweisen;
(2) der Gehalt der Polymerblöcke, die hauptsächlich eine monoalkenylaromatische Verbindung umfassen (BS), 10 Gew.-% bis weniger als 48 Gew.-% beträgt, bezogen auf das Gesamtgewicht der Blockcopolymere (A) und (B);
(3) die Blockcopolymere (A) und (B) als Ganzes ein Gewichtsmittel des Molekulargewichts (Mw) von 100 000 bis 500 000 aufweisen; und
(4) in den ganzen Blockcopolymeren (A) und (B) der Gehalt an alkenylaromatischer Verbindung (TS-BS), der durch Subtrahieren des Gehalts der Polymerblöcke, die hauptsächlich eine monoalkenylaromatische Verbindung umfassen (BS), von dem gesamten kombinierten Gehalt an monoalkenylaromatischer Verbindung (TS) erhalten wird, 2 bis 30 Gew.-% betragt.

2. Blockcopolymer-Zusammensetzung gemäß Anspruch 1, die 98 bis 20 Gew.-% Blockcopolymer (A) und 2 bis 80 Gew.-% Blockcopolymer (B) umfasst.

3. Blockcopolymer-Zusammensetzung gemäß Anspruch 1, wobei der gesamte kombinierte Gehalt an monoalkenylaromatischer Verbindung (TS) 10 bis 50 Gew.-% beträgt, die Polymerblöcke, die hauptsächlich eine monoalkenylaromatische Verbindung umfassen, ein Peak-Molekulargewicht von 5000 bis 50000 aufweisen, die Blockcopolymere (A) und (B) als Ganzes einen Gehalt an Vinylbindungen von 8 Gew.-% bis 70 Gew.-% aufweisen und die Blockcopolymer-Zusammensetzung eine durch statische thermomechanische Analyse (TMA) gemessene Erweichungstemperatur von 80 °C bis 130 °C aufweist.

4. Blockcopolymer-Zusammensetzung gemäß Anspruch 3, wobei es sich bei der monoalkenylaromatischen Verbindung um Styrol handelt.

5. Asphaltzusammensetzung, die 2 bis 30 Gewichtsteile der Blockcopolymer-Zusammensetzung gemäß einem der Ansprüche 1 bis 4 und 70 bis 98 Gewichtsteile eines Asphalts umfasst.

## Revendications

1. Composition de copolymères séquences comprenant :
au moins 20 % en poids d'un copolymère (A) séquence, qui comprend au moins deux séquences de polymère comprenant principalement un composé monoalcénylaromatique et au moins une séquence de polymère comprenant principalement un diène conjugué ; et jusqu'à 80 % en poids d'un copolymère (B) séquencé, qui comprend au moins une séquence de polymère comprenant principalement un composé monoalcénylaromatique et au moins une séquence de polymère comprenant principalement un diène conjugué et qui a un poids moléculaire de pic représentant de 1/3 à 2/3 du poids moléculaire de pic du copolymère (A) séquencé, dans lequel:
(1) les séquences de polymère comprenant principalement un composé monoalcénylaromatique ont une répartition de masse moléculaire de 5 à 20 en terme du rapport de la hauteur (H) à la largeur (W) à demi bande du pic dans un chromatogramme obtenu par chromatographie en phase gazeuse (H/W) ;
(2) la teneur en les séquences de polymère comprenant principalement un composé (BS) monoalcénylaromatique représente de 10 % du poids à moins de 48 % du poids total des copolymères (A) et (B) séquencés ;
(3) les copolymères (A) et (B) séquencés ont, en tout, une masse moléculaire moyenne en poids (Mw) de 100.000 à 500.000 ; et
(4) dans les copolymères (A) et (B) séquencés en tout, la teneur (TS-BS) en composé alcénylaromatique, obtenue en soustrayant la teneur des séquences de polymère comprenant principalement un composé (BS) monoalcénylaromatique de la teneur (TS) totale combinée en composé monoalcénylaromatique va de 2 à 30 % en poids.

2. Composition de copolymères séquencés suivant la revendication 1, qui comprend de 98 à 20 % en poids de copolymère (A) séquencé et de 2 à 80% en poids de copolymère (B) séquencé.

3. Composition de copolymères séquencés suivant la revendication 1, dans laquelle la teneur (TS) totale combinée en composé monoalcénylaromatique va de 10 à 50 % en poids ; les séquences de polymère comprenant principalement un composé monoalcénylaromatique ont un poids moléculaire de pic allant de 5.000 à 50.000 ; les copolymères (A) et (B) séquencés ont, en tout, une teneur en liaison vinyle allant de 8 % en poids à 70 % en poids ; et la composition de copolymères séquencés a un point de ramollissement, tel que mesuré par analyse thermomécanique statique (TMA), de 80° C à 130° C.

4. Composition de copolymères séquencés suivant la revendication 3, dans laquelle le composé monoalcénylaromatique est le styrène.

5. Composition d'asphalte comprenant de 2 à 30 parties en poids de la composition de copolymères séquencés suivant l'une quelconque des revendications 1 à 4 et de 70 à 98 parties en poids d'un asphalte.
